(19) Europäisches Patentamt

European Patent Office

Office européen des brevets

(11) Veröffentlichungsnummer: **0 262 534 B1**

(12) **EUROPÄISCHE PATENTSCHRIFT**

(45) Veröffentlichungstag der Patentschrift: **23.06.93**

(21) Anmeldenummer: **87113732.9**

(22) Anmeldetag: **19.09.87**

(51) Int. Cl.⁵: **H01F 1/36,** H01F 1/34,
H01F 1/11, H01F 1/10,
G11B 5/706

(54) **Feinteilige, sphärische, zweischichtige Feststoffteilchen.**

(30) Priorität: **30.09.86 DE 3633130**

(43) Veröffentlichungstag der Anmeldung:
**06.04.88 Patentblatt 88/14**

(45) Bekanntmachung des Hinweises auf die
Patenterteilung:
**23.06.93 Patentblatt 93/25**

(84) Benannte Vertragsstaaten:
**DE FR GB IT NL**

(56) Entgegenhaltungen:
**EP-A- 0 164 533     DE-A- 2 003 438**
**DE-A- 3 245 635     FR-A- 1 148 861**
**GB-A- 1 045 138     US-A- 3 822 210**
**US-A- 4 097 392**

**PATENT ABSTRACTS OF JAPAN, Band 5, Nr.
78 (E-58)[750], 22. Mai 1981; & JP-A-56 27 902**

**PATENT ABSTRACTS OF JAPAN, Band 11,
Nr. 355 (E-558)[2802], 19. November 1987; &
JP-A-62 131 504**

(73) Patentinhaber: **BASF Aktiengesellschaft
Carl-Bosch-Strasse 38
W-6700 Ludwigshafen(DE)**

(72) Erfinder: **Mair, Gunther, Dr.
Corneliusstrasse 15
W-6800 Mannheim 25(DE)**

EP 0 262 534 B1

## Beschreibung

Die Erfindung betrifft neue feinteilige, sphärische, zweischichtige, Feststoffteilchen $F_1$ mit einem Durchmesser von 5 bis 100 nm aus

A) 60 bis 70 Gew.% eines Kerns aus sphärischem, rhomboedrischem $\alpha\text{-Fe}_2\text{O}_3$ eines Reinheitsgrades von über 98 %

und

B) 30 bis 40 Gew.% einer Hülle aus einem basischen Metallhydroxidsulfat eines Alkaliionengehaltes von unter 500 ppm, welche der allgemeinen Formel I

$$M_v Mn_w Zn_x (OH)_y (SO_4)_z \qquad I$$

entspricht, in welcher für die Variablen folgende Bedingungen gelten:

| | |
|---|---|
| M | = Mg, Co, Ni, Cd, zweiwertiges Fe und/oder zweiwertiges Cu |
| v | = 0 bis 0,8 |
| w | = 0,1 bis 0,9 |
| x | = 0,1 bis 0,9 |
| y | = 1,01 bis 1,99 |
| z | = 0,005 bis 0,485 |
| v + w + X | = 1 |
| 0,5 y + z | = 1 |

Außerdem betrifft die Erfindung ein verbessertes Verfahren zur Herstellung feinteiliger, magnetischer, kubischer Ferritteilchen $F_1'$, bei welchem feinteilige, zweischichtige Feststoffteilchen $F_1$ aus einem Eisenoxidkern (A) und einer Metallhydroxide enthaltenden Hülle (B) als Zwischenprodukte entstehen.

Als "sphärisch" werden Feststoffteilchen dann bezeichnet, wenn sie kugelförmig, angenähert kugelförmig, quaderförmig oder oktaedrisch sind; als "nadelförmig" werden sie bezeichnet, wenn ihr Verhältnis von Länge zu Dicke größer als 6:1 ist. Unter "feinteiligen" Feststoffteilchen versteht man dabei Teilchen mit einem größten Druchmesser von 5 bis 2000 nm. Unter der Annahme, daß die Feststoffteilchen monodispers und weitgehend porenfrei vorliegen, entspricht dieser Durchmesser in etwa einer nach Brunauer, Emmet und Teller ermittelten inneren Oberfläche (BET-Oberfläche) von 0,2 bis 30 $m^2/g$.

Magnetische Stoffe, welche durch ein von außen angelegtes Magnetfeld hoch magnetisch werden und ohne äußeres Feld eine geringe Restmagnetisierung oder Remanenz aufweisen, nennt man "weichmagnetisch", wohingegen man solche mit einer hohen Remanenz als "hartmagnetisch" bezeichnet.

Ferrite sind keramische Eisenoxidverbindungen. Kubische Ferrite haben die ungefähre Zusammensetzung $MFe_2O_4$ (mit M = zweiwertige Metallionen), weisen Spinellstruktur auf und neigen überwiegend zur Bildung sphärischer Teilchen.

Unter "hartmagnetischen Aufzeichnungsträgern" werden die bekannten Tonbänder, Videobänder, Speicherplatten, Floppy-Discs oder Magnetstreifen auf beispielsweise Scheck- oder Kreditkarten auf der Basis von sogenanntem "Eisenoxid" verstanden.

Als "Plastoferritmaterialien" bezeichnet man Kunststoffe, welche große Mengen feinteiliger, magnetischer Teilchen als Füllstoffe enthalten.

Feinteilige, nadelförmige, zweischichtige Feststoffteilchen, welche aus einem nadelförmigen Kern aus Eisenoxid und einer Mangan- und/oder Zinkionen modifizierten Magnetit-Hülle bestehen, sind aus der DE-OS 29 16 403 bekannt. Sie eignen sich indes nicht für die Herstellung von Formteilen aus weichmagnetischen Ferriten wie Spulen- oder Transformatorenkernen. Die Herstellung solcher nadelförmiger, zweischichtiger Feststoffteilchen erfolgt durch das Ausfällen der Metallhydroxide aus ihren wäßrigen Salzlösungen mittels einer wäßrigen Base auf die Oberfläche wäßrig dispergierter, feinteiliger, nadelförmiger Eisenoxid- oder Eisenoxidhydroxidteilchen, wonach man die so erhaltenen zweischichtigen Teilchen abtrennt, mit Wasser wäscht und anschließend bei einer Temperatur unterhalb von 280°C trocknet. Die resultierenden Teilchen eignen sich zur Herstellung von magnetischen Aufzeichnungsträgern. Von Nachteil ist hierbei, daß sich bei der Wäsche der Teilchen mit Wasser die Zusammensetzung ihrer Hülle in unerwünschter Weise ändert, was die Reproduzierbarkeit des Verfahrens deutlich verschlechtern und die Qualität der Ferritteilchen erheblich vermindern kann, so daß sie sich für die obengenannten Anwendungszwecke nicht mehr eignen.

Die Herstellung einschichtiger, feinteiliger, sphärischer, magnetischer, kubischer Mangan-Zink-Ferritteilchen ist bekannt (vgl. die US-PS 4,097,392 und die US-PS 3,822,210. Sie erfolgt üblicherweise durch das gleichzeitige Ausfällen der Hydroxide aus entsprechend zusammengesetzten Metallsalzlösungen mittels wäßriger Basen wie Ammoniak, Natronlauge und/oder Natriumcarbonat. Die resultierenden einschichtigen, aus Metallhydroxiden bestehenden Feststoffteilchen (Hydroxidteilchen) werden abfiltriert, mit Wasser gewaschen, getrocknet und bei 500 bis 800°C gesintert. Dabei bilden sich unter Teilchenwachstum die gewünschten feinteiligen, sphärischen, weichmagnetischen, kubischen Ferritteilchen aus. Diese werden granuliert und gesiebt, um eine möglichst enge Teilchengrößenverteilung zu erzielen. Anschließend gibt man Zusatzstoffe wie organische Bindemittel hinzu und formt aus dem so erhaltenen Gemisch unter hohem Druck den sogenannten Grünling des herzustellenden Formteils. Dieser Grünling wird danach bei 1000 bis 1200°C zum Formteil, z.B. einem Spulenkern, gebrannt (vgl. die US-PS 4,097,392). Von Nachteil ist hierbei, daß sich die Hydroxidteilchen nur schlecht abfiltrieren lassen und daß bei der Wäsche mit Wasser oftmals eine unerwünschte Veränderung in der Teilchenzusammensetzung eintritt, welche die Reproduzierbarkeit des Verfahrens deutlich verschlechtert und die Qualität der keramischen Formteile erheblich vermindert.

Aufgabe der vorliegenden Erfindung war es, feinteilige, sphärische, zweischichtige Feststoffteilchen $F_1$, welche sich in besonderem Maße für die Herstellung feinteiliger, sphärischer, weichmagnetischer, kubischer Ferritteilchen $F_1'$ eignen, zu finden, die hinsichtlich ihrer engen Teilchengrößenverteilung, ihrer Reinheit, ihrer magnetischen Eigenschaften und ihrer Verarbeitungseigenschaften dem Stand der Technik überlegen sind, so daß sie sich in besonderem Maße für die Herstellung von weichmagnetischen, keramischen Formteilen eignen.

Demgemäß wurden die eingangs definierten Feststoffteilchen $F_1$ gefunden.

Des weiteren wurde ein Verfahren zur Herstellung feinteiliger, magnetischer, kubischer Ferritteilchen $F_1'$ unter Verwendung der Teilchen $F_1$ gemäß Anspruch 1, wobei die Teilchen $F_1$ hergestellt werden durch

a) Ausfällen der basischen Metallhydroxidsulfate der Formel I aus ihren wäßrigen Salzlösungen mittels wäßriger Basen auf die Oberfläche des in Wasser dispergierten sphärischen, rhomboedrischen $\alpha\text{-Fe}_2\text{O}_3$,

b) Versetzen der wäßrigen Dispersionen der Feststoffteilchen $F_1$ mit 5 bis 20 Vol.-%, bezogen auf das Volumen der Dispersion, eines $C_1\text{-}C_6$-Alkohols,

c) Abtrennen der Feststoffteilchen $F_1$ aus der Dispersion,

d) mehrmaliges Waschen der Feststoffteilchen $F_1$ mit einem Gemisch aus 0,05 bis 3 Vol.-Teilen eines $C_1\text{-}C_6$-Alkohols und 1 Vol.-Teil Wasser und

Trocknen und Sintern der Feststoffteilchen $F_1$ bei 800 bis 1100°C, wobei die Teilchen $F_1'$ resultieren, gefunden.

Die erfindungsgemäßen Teilchen $F_1$ weisen einen Durchmesser von 5 bis 100, vorteilhafterweise 8 bis 90 und insbesondere 10 bis 80 nm auf. Sie bestehen aus einem Kern (A) und einer diesen Kern (A) umgebenden Hülle (B).

Der Anteil der Kerne (A) an den Teilchen $F_1$ beträgt 60 bis 70, vorzugsweise 62 bis 68 und insbesondere 64 bis 66 Gew.%. Die Kerne (A) bestehen aus sphärischem, rhomboedrischem $\alpha\text{-Fe}_2\text{O}_3$ eines Reinheitsgrades von über 98, vorzugsweise 99 und insbesondere 99,4 %. Erfindungsgemäß von besonderem Vorteil ist hierbei sogenanntes Carbonyleisenoxid, welches aus Eisenpentacarbonyl hergestellt wird und einen Reinheitsgrad von über 99,4 %, insbesondere einen solchen von über 99,5 % und höher aufweist. Der Durchmesser erfindungsgemäß geeigneter $\alpha\text{-Fe}_2\text{O}_3$-Teilchen liegt zwischen 10 und 80 nm. Die BET-Oberfläche erfindungsgemäß geeigneter $\alpha\text{-Fe}_2\text{O}_3$-Teilchen beträgt 10 bis 25 $m^2$/g.

Der Anteil der Hüllen (B) an den Teilchen $F_1$ beträgt 30 bis 70, vorzugsweise 32 bis 38 und insbesondere 34 bis 36 Gew.%. Die Hüllen weisen einen Alkaliionengehalt von unter 500 ppm auf. Sie bestehen aus basischen Metallhydroxidsulfaten. Dabei weist der Begriff "basisch" darauf hin, daß in den Hüllen das Äquivalent der Hydroxylanionen stets größer ist als das Äquivalent der Sulfatanionen, wobei unter "Äquivalent" die Anzahl der zur elektrischen Neutralisation der Kationen notwendigen negativen Ladungen zu verstehen ist.

Beispiele für erfindungsgemäß geeignete Hüllen (B) der allgemeinen Formel I, für welche die Bedingung v ≠ 0 gilt, sind:

$Mg_{0,1}Mn_{0,6}Zn_{0,3}(OH)_{1,4}(SO_4)_{0,3}$,

$Ni_{0,3}Mn_{0,2}Zn_{0,5}(OH)_{1,8}(SO_4)_{0,1}$,

$Cd_{0,05}Mn_{0,65}Zn_{0,3}(OH)_{1,08}(SO_4)_{0,46}$,

zweiwertiges $Fe_{0,8}Mn_{0,1}Zn_{0,1}(OH)_{1,9}(SO_4)_{0,05}$,

zweiwertiges $Cu_{0,02}Mn_{0,7}Zn_{0,28}(OH)_{1,4}(SO_4)_{0,3}$,

$Mg_{0,2}Co_{0,1}Mn_{0,6}Zn_{0,1}(OH)_{1,7}(SO_4)_{0,15}$,

$Co_{0,1}Ni_{0,15}Mn_{0,5}Zn_{0,25}(OH)_{1,3}(SO_4)_{0,35}$,

zweiwertiges $Fe_{0,7}$zweiwertiges $Cu_{0,02}Mn_{0,14}Zn_{0,14}(OH)_{1,8}(SO_4)_{0,1}$,

$Mg_{0,01}Co_{0,01}Ni_{0,01}Mn_{0,67}Zn_{0,3}(OH)_{1,3}(SO_4)_{0,35}$ oder

$Co_{0,01}Ni_{0,01}Cd_{0,01}Mn_{0,7}Zn_{0,27}(OH)_{1,85}(SO_4)_{0,075}$.

Beispiele erfindungsgemäß geeigneter Hüllen (B) der allgemeinen Formel I, für welche die Bedingung v = 0 gilt, sind:

3

$Mn_{0,7}Zn_{0,3}(OH)_{1,02}(SO_4)_{0,49}$,

$Mn_{0,1}Zn_{0,9}(OH)_{1,98}(SO_4)_{0,01}$,

$Mn_{0,9}Zn_{0,1}(OH)_{1,5}(SO_4)_{0,25}$ oder

$Mn_{0,5}Zn_{0,5}(OH)_{1,6}(SO_4)_{0,2}$.

Für erfindungsgemäß besonders geeignete Hüllen (B) der allgemeinen Formel I gelten die Bedingung v = 0, w = 0,6 bis 0,8, x = 0,2 bis 0,4, y = 1,4 bis 1,9 und z = 0,05 bis 0,3. Beispiele solcher Hüllen (B) sind:

$Mn_{0,6}Zn_{0,4}(OH)_{1,4}(SO_4)_{0,3}$,

$Mn_{0,7}Zn_{0,3}(OH)_{1,9}(SO_4)_{0,05}$,

$Mn_{0,65}Zn_{0,35}(OH)_{1,5}(SO_4)_{0,25}$,

$Mn_{0,72}Zn_{0,28}(OH)_{1,76}(SO_4)_{0,12}$ oder

$Mn_{0,72}Zn_{0,28}(OH)_{1,64}(SO_4)_{0,18}$.

Besonders vorteilhafte erfindungsgemäße Teilchen $F_1$ haben einen Durchmesser zwischen 10 und 80 nm. Sie weisen eine BET-Oberfläche von 15 bis 22 $m^2/g$ auf. Ihre Kerne (A) bestehen aus Carbonyleisenoxid eines Reinheitsgrades von 99,5 % und höher. Der Anteil der Kerne (A) an den Teilchen $F_1$ beträgt 64 bis 66 Gew.%. Ihre Hüllen (B) weisen einen Alkaliionengehalt von unter 500 ppm auf. Sie bestehen aus Mangan-Zink-Hydroxidsulfat der vorstehend angegebenen besonders geeigneten Zusammensetzung. Ganz besonders vorteilhafte erfindungsgemäße Teilchen $F_1$ weisen, bezogen auf ihr Gesamtgewicht, einen Sulfatgehalt von 4 bis 6 Gew.% auf, was den Bedingungen y = 1,64 bis 1,76 und z = 0,12 bis 0,18 der Formel I entspricht.

Das erfindungsgemäße Verfahren geht von einer wäßrigen Dispersion von sphärischem $\alpha$-$Fe_2O_3$ aus, wobei sich die Menge dieser Teilchen nach der gewünschten stöchiometrischen Zusammensetzung der Endprodukte richtet.

In der Dispersion löst man die entsprechenden Metallsalze. Die Art und jeweilige Menge der Metallsalze richtet sich nach der gewünschten stöchiometrischen Zusammensetzung des Endproduktes.

Beispiele geeigneter Salze sind hierbei zusammen mit den Sulfaten alle Salze, die wasserlöslich sind wie die Chloride, Bromide, Nitrate oder Acetate.

Zu dieser Mischung wird unter Rühren bei Zimmertemperatur solange eine 5 bis 10 normale Alkalilauge zugegeben, bis ein pH-Wert von 9 bis 11 erreicht ist. Die Dauer der Zugabe wird so gewählt, daß sich eine mechanisch feste, chemisch stabile Hülle (B) auf dem Kern (A) bilden kann; im allgemeinen liegt sie, je nach Ansatzgröße, bei 10 Minuten bis 2 Stunden.

Anschließend wird die Dispersion der Teilchen $F_1$ während 10 Minuten bis 1 Stunde bei Raumtemperatur nachgerührt, wobei man gegebenenfalls weitere Alkalilauge hinzugibt, um den pH-Wert der Dispersion bei 9 bis 11, insbesondere aber 10, zu halten.

Danach wird in erfindungsgemäßer Verfahrensweise diese Dispersion unter Rühren mit 5 bis 20 Vol.-%, bezogen auf das Volumen der Dispersion, eines $C_1$-$C_6$-Alkohols versetzt.

Beispiele geeigneter Alkohole sind Ethanol, n-Propanol, Isopropanol, n-Butanol, iso-Butanol, tert.-Butanol, n-Pentanol, n-Hexanol oder Cyclohexanol oder Gemische aus diesen, wobei iso-Propanol von Vorteil ist.

Nach dem Abtrennen der Teilchen $F_1$ werden sie in erfindungsgemäßer Verfahrensweise mehrfach mit einem Gemisch aus 1 Vol.-Teil Wasser und 0,05 bis 0,3 Vol.-Teilen der vorstehend genannten Alkohole gewaschen. Das Waschen wird so lange durchgeführt, bis das Wasser/Alkohol-Gemisch neutral reagiert und keine Anionen und/oder Kationen darin mehr nachweisbar sind, d.h., daß übliche und bekannte Nachweisreaktionen für die betreffenden Ionen negativ verlaufen.

Anschließend werden die Teilchen getrocknet.

Diese Verfahrensschritte können, falls sich dies als notwendig erweist, unter Inertgas ausgeführt werden.

Bei den so erhaltenen Teilchen handelt es sich um die erfindungsgemäßen Feststoffteilchen $F_1$.

Die Teilchen $F_1$ werden im weiteren Ablauf des Verfahrens durch das Sintern, d.h. durch den Grünbrand, bei 800 bis 1100 °C in Ferriteilchen $F_1'$ mit an sich bekannter Zusammensetzung umgewandelt. Die Sinterzeit beträgt im allgemeinen 30 Minuten bis 2 Stunden. Während des Sinterns nimmt die Teilchenzahl ab, und es erhöht sich der Teilchendurchmesser je nach Sinterdauer und -temperatur auf 100 bis 2000 nm. Der Sulfatgehalt nimmt dabei drastisch ab und erreicht Werte von unter 0,01 Gew.%. Das Atomverhältnis der in den Ferriteilchen $F_1'$ enthaltenen Metalle entspricht dem der Ausgangsverbindungen. Falls Abweichungen davon auftreten, dann sind sie nicht größer als ± 3 %. Der Alkaliionengehalt der Ferriteilchen $F_1'$ liegt unter 500 ppm.

Die nach dem erfindungsgemäßen Verfahren hergestellten Ferriteilchen $F_1'$ können in üblicher und bekannter Weise zu weichmagnetischen, keramischen Formteilen verarbeitet werden.

Die erfindungsgemäßen Feststoffteilchen $F_1$ weisen gegenüber dem Stand der Technik zahlreiche besondere Vorteile auf. So sind sie von besonders hoher Reinheit und allein schon deswegen für die Herstellung weichmagnetischer Ferrite $F_1'$ und weichmagnetischer, keramischer Formteile daraus hervorragend geeignet. Sie lassen sich in exakt reproduzierbarer Weise und in sehr enger Teilchengrößenverteilung herstellen. Ihre Hüllen sind mechanisch und chemisch sehr stabil, so daß es bei der weiteren Handhabung und/oder bei der Lagerung zu keiner Schädigung der Teilchen kommt.

Ebenso weist das erfindungsgemäße Verfahren gegenüber dem Stand der Technik besondere Vorteile auf. So können mit Hilfe dieses Verfahrens feinteilige, magnetische, kubische Ferritteilchen $F_1'$ in exakt reproduzierbarer Weise und hoher Reinheit hergestellt werden, wobei insbesondere der besonders niedrige Alkaliionengehalt hervorzuheben ist. Dieser besonders niedrige Alkaliionengehalt wird erhalten, ohne daß eine unerwünschte Veränderung der Teilchenzusammensetzung in Kauf genommen werden muß. Die nach dem erfindungsgemäßen Verfahren hergestellten kubischen Ferritteilchen $F_1'$ liefern daher besonders vorteilhafte weichmagnetische Formteile.

Ganz besondere Vorteile gegenüber dem Stand der Technik weist das erfindungsgemäße Verfahren dann auf, wenn es der Herstellung der erfindungsgemäßen Feststoffteilchen $F_1$ und ihrer Weiterverarbeitung zu Ferritteilchen $F_1'$ dient. Dadurch werden nämlich Ferritteilchen $F_1'$ erhalten, deren Zusammensetzung, niedriger Alkaliionengehalt und enge Teilchengrößenverteilung sich exakt reproduzieren lassen. Darüber hinaus kommt es weder beim Transport, noch bei längerer Lagerung und bei der Weiterverarbeitung zu einer Schädigung der Ferritteilchen $F_1'$. Hinzu kommt noch, daß das Sintern bei vergleichsweise niedriger Temperatur in vergleichsweise kurzer Zeit durchgeführt werden kann.

Beispiele

In den Beispielen und Vergleichsversuchen wurde die Teilchenzusammensetzung mittels des Gewichtszuwachses der dispergierten Eisenoxid- oder Eisenoxidhydroxidteilchen und der chemischen Elementaranalyse bestimmt. Der Durchmesser der Teilchen wurde mit Hilfe der Transmissionselektronenmikroskopie ermittelt. Die innere Oberfläche der Teilchen wurde nach der BET-Methode bestimmt.

Beispiel 1

Herstellung von Feststoffteilchen $F_1$ und von Ferritteilchen $F_1'$ nach dem erfindungsgemäßen Verfahren

Eine für ein Metallatomverhältnis im Ferrit von 2,6Mn : 1Zn : 8,4Fe ($\stackrel{\wedge}{=}$ $Mn_{0,65}Zn_{0,25}Fe_{2,1}O_4$) berechnete Mischung aus

143,7 g $\alpha$-$Fe_2O_3$ (rotes Carbonyleisenoxid, Reinheitsgrad: 99,5 %; BET-Oberfläche: 10 bis 20 $m^2$/g; Teilchendurchmesser der sphärischen Teilchen: 8 bis 70 nm),
94,2 g $MnSO_4 \cdot H_2O$,
61,6 g $ZnSO_4 \cdot 7H_2O$ und
1200 ml Wasser
wurde unter Inertgas vorgelegt.

Zu dieser Mischung gab man bei Zimmertemperatur und unter Rühren während 15 Minuten 160 ml 8 normaler Natronlauge, so daß ein pH-Wert von 10 erreicht wurde. Das Reaktionsgemisch wurde während 15 Minuten bei Zimmertemperatur weitergerührt, wobei der pH-Wert durch Zugabe weiterer 8 normaler Natronlauge konstant bei 10 gehalten wurde.

Zu der resultierenden Dispersion der Feststoffteilchen $F_1$ wurden 120 ml Isopropanol hinzugegeben. Anschließend wurden die Teilchen abfiltriert und achtmal mit je 1 Liter eines Gemisches aus Wasser und Isopropanol (Volumenverhältnis: 10:1) gewaschen und danach getrocknet und portioniert.

Eine Portion der so erhaltenen Feststoffteilchen $F_1$ wurde analysiert, eine andere während 60 Minuten bei 1000°C gesintert und anschließend untersucht.

Die Ergebnisse der chemischen Analyse sowie der Bestimmung der BET-Oberfläche und des Teilchendurchmessers finden sich in der Tabelle.

Die Ergebnisse zeigen, daß sich die Ferritzusammensetzung mit Hilfe des erfindungsgemäßen Verfahrens hervorragend einstellen ließ, wobei ein sehr niedriger Natriumionengehalt erreicht wurde, ohne daß dabei ein Verlust an Mangan und/oder Zink in Kauf genommen werden mußte, was für die weitere Verarbeitung der Teilchen $F_1$ und der daraus hergestellten Ferritteilchen $F_1'$ von grundsätzlichem Vorteil war, Darüber hinaus wiesen die Ferritteilchen $F_1'$ eine enge Teilchengrößenverteilung und eine besonders niedrige Remanenz auf und waren sphärisch geformt. Sie waren hervorragend für die Herstellung weichmagnetischer, keramischer Formteile geeignet.

Beispiele 2 und 3

Herstellung von Feststoffteilchen $F_1$ und von Ferritteilchen $F_1$' nach dem erfindungsgemäßen Verfahren

Herstellvorschrift:

Beispiel 1 wurde zweimal wiederholt, mit dem Unterschied, daß
- bei Beispiel 2 die Salze und $\alpha$-$Fe_2O_3$ in 800 ml anstelle von 1200 ml Wasser vorgelegt wurden und daß die Feststoffteilchen $F_1$ zehnmal mit je 1 Liter des Wasser/Isopropanol(10:1)-Gemisches gewaschen wurden
und daß
- bei Beispiel 3 zur Suspension der Feststoffteilchen $F_1$ 300 ml anstelle von 120 ml Isopropanol zugesetzt wurde, und daß die Feststoffteilchen I sechsmal mit je 1 Liter eines Wasser/Isopropanol-(4:1)-Gemisches gewaschen wurden.

Die Ergebnisse der chemischen Analyse sowie der Bestimmung der BET-Oberflache und des Teilchendurchmessers finden sich in der Tabelle.

Die Ergebnisse belegen, daß sich die gewünschte Ferritzusammensetzung mit Hilfe des erfindungsgemäßen Verfahrens hervorragend reproduzieren ließ, wobei man immer die bei Beispiel 1 genannten besonderen Vorteile erhielt.

Vergleichsversuch 1

Herstellung von Ferritteilchen nach einem bekannten Verfahren

Herstellvorschrift:

Eine für eine Summenformel von $Mn_{0,65}Zn_{0,25}Fe_{2,1}O_4$ berechnete Mischung aus
486,5 g $FeCl_3 \cdot 6H_2O$,
110,3 g $MnCl_2 \cdot 4H_2O$,
29,2 g $ZnCl_2$ und
1200 ml $H_2O$
wurde an der Luft vorgelegt.

Zu dieser Lösung gab man unter Rühren während 20 Minuten 872 ml 8 normaler Natronlauge, so daß ein pH-Wert von 10 erreicht wurde. Das Reaktionsgemisch wurde während 15 Minuten bei Zimmertemperatur weitergerührt, wobei der pH-Wert durch Zugabe weiterer 8 normaler Natronlauge konstant bei 10 gehalten wurde und wobei man Sauerstoff durch das Reaktionsgemisch leitete. Die resultierende Dispersion von feinteiligen gemischten Mangan-Zink-Eisenhydroxiden (Hydroxidteilchen) wurde filtriert, wobei sich die Filtration schwierig gestaltete, weil besonders feinteilige Teilchen entweder die Filter passierten oder - bei Verwendung feinporiger Filter - diese verstopften.

Die abfiltrierten Hydroxidteilchen wurden zehnmal mit je einem Liter Wasser gewaschen und anschließend getrocknet und portioniert.

Eine der Portionen wurde analysiert, die andere wurde während 60 Minuten bei 1000°C gesintert, wonach man die entstandenen Ferritteilchen $F_1$" untersuchte.

Die Ergebnisse der chemischen Analyse sowie die Bestimmung der BET-Oberfläche und des Teilchendurchmessers finden sich in der Tabelle.

Die Ergebnisse zeigen, daß die Hydroxidteilchen einen unvorteilhaft hohen Natriumionengehalt aufwiesen und in ihrer Zusammensetzung deutlich von der gewünschten abwichen. Ihre Teilchengrößenverteilung war breit. Ein Teil der Teilchen wies eine unsauber ausgeprägte Nadelform auf, ein anderer, größerer Anteil war unregelmäßig geformt. Schön ausgeprägte, sphärische Teilchen waren in der Minderzahl. Ebenso wichen die Ferritteilchen $F_1$" in ihrer Zusammensetzung und Form von der gewünschten ab. Ihr Natriumgehalt war unvorteilhaft hoch. Sie waren für die Herstellung weichmagnetischer, keramischer Formteile nur bedingt geeignet.

Tabelle: Versuchsergebnisse - gewünschte Zusammensetzung
der Ferritteilchen $F_1'$: $Mn_{0,65}Zn_{0,25}Fe_{2,1}O_4$;
Metallatomverhältnis: 2,6 Mn : 1 Zn : 8,4 Fe

| Beispiele und Vergleichsversuche Nr. | BET-Oberfläche ($m^2/g$) | Teilchendurchmesser (nm) | $Na^{\oplus}$-Gehalt (in der Hülle (B) der Feststoffteilchen oder in den Ferritteilchen) (ppm) | $SO_4^{2\ominus}$-Gehalt (in der Hülle (B) der Feststoffteilchen oder in den Ferritteilchen) (Gew.-%) | Stoffliche Zusammensetzung: Summenformel und Metallatomverhältnis |
|---|---|---|---|---|---|
| **Bsp. 1** | | | | | |
| Teilchen $F_1$ | 20 | 10-80 | Hülle (B): 90 | Hülle (B): 4 | Hülle (B): $Mn_{0,72}Zn_{0,28}(OH)_{1,76}(SO_4)_{0,12}$ 2,57 Mn : 1 Zn : 8,13 Fe |
| Ferritteilchen $F_1'$ | 0,2 | 500-2000 | 30 | 0,005 | $Mn_{0,659}Zn_{0,256}Fe_{2,08}O_4$ 2,57 Mn : 1 Zn : 8,13 Fe |
| **Bsp. 2** | | | | | |
| Teilchen $F_1$ | 21 | 15-80 | Hülle (B): 90 | Hülle (B): 6 | Hülle (B): $Mn_{0,72}Zn_{0,28}(OH)_{1,64}(SO_4)_{0,18}$ 2,6 Mn : 1 Zn : 8,36 Fe |
| Ferritteilchen $F_1'$ | 0,25 | 1000-2000 | 30 | 0,001 | $Mn_{0,65}Zn_{0,25}Fe_{2,1}O_4$ 2,6 Mn : 1 Zn : 8,4 Fe |

Tabelle: Fortsetzung

| Beispiele und Vergleichsversuche Nr. | BET-Oberfläche $(m^2/g)$ | Teilchendurchmesser (nm) | $Na^{\oplus}$-Gehalt (in der Hülle (B) der Feststoffteilchen oder in den Ferritteilchen) (ppm) | $SO_4{}^{2\ominus}$-Gehalt (in der Hülle (B) der Feststoffteilchen oder in den Ferritteilchen) (Gew.-%) | Stoffliche Zusammensetzung: Summenformel und Metallatomverhältnis |
|---|---|---|---|---|---|
| Bsp. 3 | | | | | |
| Teilchen $F_1$ | 19 | 8-90 | Hülle (B): 340 | Hülle (B): 5 | Hülle (B): $Mn_{0,73}Zn_{0,27}(OH)_{1,7}(SO_4)_{0,15}$ 2,67 Mn : 1 Zn : 8,36 Fe |
| Ferritteilchen $F_1{}'$ | 0,2 | 10-80 | 120 | 0,005 | $Mn_{0,67}Zn_{0,25}Fe_{2,08}O_4$ 2,68 Mn : 1 Zn : 8,32 Fe |

Tabelle: Fortsetzung

EP 0 262 534 B1

| Beispiele und Vergleichsversuche<br><br>Nr. | BET-Oberfläche<br><br><br><br>$(m^2/g)$ | Teilchendurchmesser<br><br><br>$(nm)$ | $Na^{\oplus}$-Gehalt (in der Hülle (B) der Feststoffteilchen oder in den Ferritteilchen) $(ppm)$ | $SO_4{}^{2\ominus}$-Gehalt (in der Hülle (B) der Feststoffteilchen oder in den Ferritteilchen) $(Gew.-\%)$ | Stoffliche Zusammensetzung: Summenformel und Metallatomverhältnis |
|---|---|---|---|---|---|

Tabelle: Fortsetzung

| Beispiele und Ver- gleichs- versuche Nr. | BET-Ober- fläche (m²/g) | Teilchen- durch- messer (nm) | Na⊕-Gehalt (in der Hülle (B) der Feststoffteil- chen oder in den Ferritteilchen) (ppm) | $SO_4^{2\ominus}$-Gehalt (in der Hülle (B) der Feststoffteil- chen oder in den Ferritteilchen) (Gew.-%) | Stoffliche Zusammensetzung: Summenformel und Metallatomverhältnis |
|---|---|---|---|---|---|
| Vgl. 1 | | | | | |
| Hydroxid- teilchen | 25 | 5-90 | 68000 | - | 2,5 Mn : 1 Zn : 8,5 Fe |
| Ferrit- teilchen $F_1''$ | 0,05 | 1500-3000 | 68000 | - | $Mn_{0,66}Zn_{0,26}Fe_{2,08}O_4$ 2,5 Mn : 1 Zn : 8,0 Fe |

**Patentansprüche**

1. Feinteilige, sphärische, zweischichtige Feststoffteilchen $F_1$ mit einem Durchmesser von 5 bis 100 nm aus

A) 60 bis 70 Gew.% eines Kerns aus sphärischem, rhomboedrischem $\alpha$-$Fe_2O_3$ eines Reinheitsgrades von über 98 %

und

B) 30 bis 40 Gew.% einer Hülle aus einem basischen Metallhydroxidsulfat eines Alkaliionengehaltes von unter 500 ppm, welche der allgemeinen Formel I

$$M_vMn_wZn_x(OH)_y(SO_4)_z \qquad I$$

entspricht, in welcher für die Variablen folgende Bedingungen gelten:

| | |
|---|---|
| M | = Mg, Co, Ni, Cd, zweiwertiges Fe und/oder zweiwertiges Cu |
| v | = 0 bis 0,8 |
| w | = 0,1 bis 0,9 |
| x | = 0,1 bis 0,9 |
| y | = 1,01 bis 1,99 |
| z | = 0,005 bis 0,505 |
| v + w + x | = 1 |
| 0,5 y + z | = 1 |

2. Verfahren zur Herstellung feinteiliger, magnetischer, kubischer Ferritteilchen $F_1'$ unter Verwendung der Teilchen $F_1$ gemäß Anspruch 1, wobei die Teilchen $F_1$ hergestellt werden durch

a) Ausfällen der basischen Metallhydroxidsulfate der Formel I aus ihren wäßrigen Salzlösungen mittels wäßriger Basen auf die Oberfläche des in Wasser dispergierten sphärischen, rhomboedrischen $\alpha$-$Fe_2O_3$,

b) Versetzen der wäßrigen Dispersionen der Feststoffteilchen $F_1$ mit 5 bis 20 Vol.-%, bezogen auf das Volumen der Dispersion, eines $C_1$-$C_6$-Alkohols,

c) Abtrennen der Feststoffteilchen $F_1$ aus der Dispersion,

d) mehrmaliges Waschen der Feststoffteilchen $F_1$ mit einem Gemisch aus 0,05 bis 3 Vol.-Teilen eines $C_1$-$C_6$-Alkohols und 1 Vol.-Teil Wasser und

Trocknen und Sintern der Feststoffteilchen $F_1$ bei 800 bis 1100°C, wobei die Teilchen $F_1'$ resultieren.

3. Verwendung der Feststoffteilchen $F_1$ gemäß Anspruch 1 für die Herstellung weichmagnetischer, keramischer Formteile.

4. Verwendung der gemäß Anspruch 2 hergestellten Feststoffteilchen $F_1'$ für die Herstellung weichmagnetischer, keramischer Formteile.

**Claims**

1. A finely divided, spherical, two-layer solid particle $F_1$ having a diameter of from 5 to 100 nm, comprising

A) from 60 to 70% by weight of a core of spherical, rhombohedral $\alpha$-$Fe_2O_3$ having a purity of more than 98%

and

B) from 30 to 40% of a shell of a basic metal hydroxide sulfate containing less than 500 ppm of alkali metal ions, which is of the formula I

$$M_vMn_wZn_x(OH)_y(SO_4)_z \qquad I$$

where

| | |
|---|---|
| M | is Mg, Co, Ni, Cd, divalent Fe and/or divalent Cu, |
| v | is from 0 to 0.8, |
| w | is from 0.1 to 0.9, |
| x | is from 0.1 to 0.9, |
| y | is from 1.01 to 1.99, |
| z | is from 0.005 to 0.505, |
| v + w + x | = 1 and |
| 0.5 y + z | = 1. |

**2.** A process for the preparation of a finely divided, magnetic, cubic ferrite particle $F_{1'}$ using the particles $F_1$ as claimed in claim 1, wherein the particles $F_1$ are prepared by

a) precipitating the basic metal hydroxide sulfate of the formula I from its aqueous salt solution by means of an aqueous base onto the surface of a spherical, rhombohedral, $\alpha$-$Fe_2O_3$ dispersed in water,

b) adding from 5 to 20% by volume, based on the volume of the dispersion, of a $C_1$-$C_6$-alcohol, to the aqueous dispersion of the solid particles $F_1$,

c) isolating the solid particles $F_1$ from the dispersion,

d) washing the solid particles $F_1$ several times with a mixture of from 0.05 to 3 parts by volume of a $C_1$-$C_6$-alcohol and 1 part by volume of water and

drying and sintering the solid particles $F_1$ at from 800 to 1100°C, the particles $F_{1'}$ resulting.

**3.** Use of the solid particles $F_1$ as claimed in claim 1 for the production of magnetically soft, ceramic moldings.

**4.** Use of the solid particles $F_{1'}$ prepared as claimed in claim 2 for the production of magnetically soft, ceramic moldings.

**Revendications**

**1.** Particules solides à double couche, sphériques, finement divisées $F_1$, d'un diamètre de 5 à 100 nm constituées de

A) 60 à 70 % en poids d'un noyau en alpha-$Fe_2O_3$ sphérique, rhomboédrique, d'un degré de pureté supérieur à 98 % et

B) 30 à 40 % en poids d'une enveloppe en sulfate d'hydroxyde métallique basique d'une teneur en ions alcalins inférieure à 500 ppm, qui correspond à la formule générale I

$$M_vMn_wZn_x(OH)_y(SO_4)_z \qquad I$$

dans laquelle les variables ont les significations suivantes

| | |
|---|---|
| M | = Mg, Co, Ni, Cd, Fe bivalent et/ou Cu bivalent |
| v | = 0 à 0,8 |
| w | = 0,1 à 0,9 |
| x | = 0,1 à 0,9 |
| y | = 1,01 à 1,99 |
| z | = 0,005 à 0,505 |
| v + w + x | = 1 |
| 0,5 y + z | = 1 |

**2.** Procédé de préparation de particules de ferrite, cubiques, magnétiques, finement divisées $F_1'$ en utilisant les particules $F_1$ selon la revendication 1, les particules $F_1$ étant préparées par :

a) précipitation des sulfates d'hydroxyde métallique basiques de formule I de leurs solutions salines aqueuses, au moyen de bases aqueuses, sur la surface de alpha-$Fe_2O_3$ rhomboédrique, sphérique, dispersé dans l'eau,

b) mélange des dispersions aqueuses des particules $F_1$ avec 5 à 20 % en volume, rapporté au volume de la dispersion, d'un alcool en C1-C6,

c) séparation des particules $F_1$ de la dispersion,

d) lavages répétés des particules $F_1$ avec un mélange de 0,05 à 3 parties en volume d'un alcool en C1-C6 et 1 partie en volume d'eau, et séchage et frittage des particules F1 à 800 à 1100 degrés C, les particules F1' en résultant.

**3.** Utilisation des particules solides $F_1$ selon la revendication 1 pour la fabrication de pièces moulées céramiques magnétiques.

**4.** Utilisation des particules $F_1'$ préparées selon la revendication 2 pour la fabrication de pièces moulées céramiques magnétiques.